Europäisches Patentamt

(19) European Patent Office

Office européen des brevets

(11) Veröffentlichungsnummer: **0 138 038**
**B1**

(12) **EUROPÄISCHE PATENTSCHRIFT**

(45) Veröffentlichungstag der Patentschrift:
20.05.87

(21) Anmeldenummer: 84110629.7

(22) Anmeldetag: 06.09.84

(51) Int. Cl.⁴: **B 25 J  15/00**

(54) Greifer einer Handhabungseinrichtung, insbesondere eines Industrieroboters.

(30) Priorität: 27.09.83  DE 3334967

(43) Veröffentlichungstag der Anmeldung:
24.04.85 Patentblatt 85/17

(45) Bekanntmachung des Hinweises auf die Patenterteilung:
20.05.87 Patentblatt 87/21

(84) Benannte Vertragsstaaten:
AT BE CH DE FR GB IT LI NL SE

(56) Entgegenhaltungen:
DE-A-1 502 860
GB-A-2 130 550

(73) Patentinhaber: Siemens Aktiengesellschaft Berlin
und München, Wittelsbacherplatz 2, D-8000
München 2 (DE)

(72) Erfinder: Burger, Rudolf, Sipplingerstrasse 12,
D-8000 München 60 (DE)
Erfinder: Kobras, Franz, Leipartstrasse 13, D-8000
München 70 (DE)
Erfinder: Kohler, Gerd, Dipl.- Ing., Romanstrasse
1a, D-8000 München 19 (DE)
Erfinder: Niedermayr, Erich, Dipl.- Ing., bei Dr.
Lechner Keuslinstrasse 6, D-8000 München 40 (DE)
Erfinder: Pössinger, Josef, Dipl.- Ing.,
Ammergauer Strasse 32, D-8101 Ettal (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Greifer einer Handhabungseinrichtung, insbesondere eines Industrieroboters, mit einem Greifergehäuse und einer Spanneinrichtung zum reibschlüssigen Greifen von Teilen.

Derartige Greifer mit einer zangenartigen Spanneinrichtung werden beispielsweise für Handhabungsaufgaben bei nach einem festen Programm arbeitenden Einlegegeräten oder bei frei programmierbaren Industrierobotern eingesetzt. Für das Greifen von zylindrischen Teilen sind diese bekannten Greifer jedoch nicht geeignet. So sollen beispielsweise in Horden bereitgestellte Wellen oder ähnliche zylindrische Teile, deren Längsachsen im wesentlichen senkrecht zur Hordengrundfläche stehen, vom Greifer eines Industrieroboters ergriffen werden. Im Hinblick auf die geometrischen Gegebenheiten einer Welle ist dabei nur ein Greifen über Reibschluß möglich. Aufgrund von Fertigungstoleranzen der Horden, aufgrund des Spieles zwischen Welle und Aufnahmebohrung der Horden und einem damit verbundenen Kippen der Welle in der Aufnahmebohrung und aufgrund der erreichbaren Positioniergenauigkeit des Greifers eines Industrieroboters sind Positionskorrekturen des Greifers erforderlich, um ein sicheres Greifen der Wellen zu gewährleisten. Derartige Positionskorrekturen können mit den bekannten Greifern jedoch nicht durchgeführt werden.

Der Erfindung liegt daher die Aufgabe zugrunde, einen Greifer für Industrieroboter zu schaffen, mit welchem die zylindrischen Enden von in Horden bereitgestellten Teilen wie Wellen, Rotoren und dgl. sicher ergriffen werden können.

Diese Aufgabe wird bei einem Greifer der eingangs genannten Art durch folgende Merkmale gelöst:

a) in dem Greifergehäuse ist ein als ebenes Flächengelenk ausgebildetes Gleitstück angeordnet,

b) in dem Gleitstück befindet sich eine nach unten geöffnete und nach oben in eine Aufnahmebohrung übergehende, konische Zentrierglocke,

c) die in dem Gleitstück angeordnete Spanneinrichtung besitzt mindestens ein queraxial in die Aufnahmebohrung drückbares Spannglied.

Ein erfindungsgemäß ausgestalteter und am Flansch eines Industrieroboters befestigter Greifer kann nun auf das zylindrische Ende eines in einer Horde bereitgestellten Teiles derart senkrecht abgesenkt werden, daß sich die in das Gleitstück eingearbeitete konische Zentrierglocke dem zylindrischen Ende von oben her nähert. Eine erforderliche Positionskorrektur des Greifers wird dabei dadurch erreicht, daß das zylindrische Ende beim Berühren der Zentrierglocke eine Reaktionskraft auf die Zentrierglocke ausübt, deren horizontale Komponente das Gleitstück dann waagrecht so weit verschiebt, daß das zylindrische Ende beim weiteren Absenken des Greifers in die Aufnahmebohrung eintreten kann. Ist dies geschehen, so klemmt die in dem Gleitstück angeordnete Spanneinrichtung das zylindrische Ende des aus der Horde zu entnehmenden Teiles in der Aufnahmebohrung. Mit dem erfindungsgemäßen Greifer ist also eine selbsttätige Positionskorrektur und ein sicheres Greifen der Teile gewährleistet.

Gemäß einer bevorzugten Ausgestaltung der Erfindung ist das Gleitstück mit Hilfe einer Zentriereinrichtung in eine reproduzierbare Position zum Greifergehäuse bringbar. Diese Zentriereinrichtung kann dann vor und nach dem Greifen eines Teiles betätigt werden. Vorzugsweise besteht die Zentriereinrichtung aus einem in dem Greifergehäuse angeordneten und in eine Zentrierbohrung des Gleitstückes absenkbaren Zentrierkonus. Der Zentriervorgang kann dann auf einfache Weise durch Absenken des Zentrierkonus durchgeführt werden.

Gemäß einer weiteren bevorzugten Ausgestaltung der Erfindung ist die Bewegungsfreiheit des Gleitstückes durch einen in die Zentrierbohrung ragenden Ansatz des Zentrierkonus und durch einen in ein Langloch ragenden Stift begrenzt. Dabei ist es zweckmäßig, wenn der in dem Greifergehäuse befestigte Stift in ein Langloch des Gleitstückes ragt. Neben einer Begrenzung der Bewegungsfreiheit des Gleitstückes wird durch den in dem Langloch geführten Stift beim Zentriervorgang auch eine mögliche Verdrehung des Gleitstückes korrigiert.

Das Spannglied der Spanneinrichtung ist vorzugsweise an einen Kniehebelantrieb angelenkt. Ein derartiger Kniehebelantrieb hat den Vorteil, daß bei schweren Teilen sehr hohe Spannkräfte aufgebracht werden können. Darüberhinaus kann dann die Bewegung des Kniegelenks in einer über die Mittelstellung hinausgehenden Lage durch einen Anschlag begrenzt sein, wobei die Differenz zwischen Spannstellung und maximalem Hub des Spanngliedes durch eine vorgespannte Feder ausgleichbar ist. Sobald das Kniegelenk dann bei der Betätigung der Spanneinrichtung auch nur geringfügig über die Mittelstellung hinaus bewegt wird, schnappt es in die durch den Anschlag begrenzte obere Endstellung. In dieser oberen Endstellung wird das Kniegelenk dann selbst bei einem Ausfall der für die Betätigung der Spanneinrichtung notwendigen Energie durch die Kraft der vorgespannten Feder weiter gehalten. Damit ist dann aber auch gewährleistet, daß bei einem Energieausfall im Falle einer Notabschaltung die von dem Greifer einmal gegriffenen Teile nicht mehr ausgelassen werden können. Diese Sicherheitsvorkehrung ist im Hinblick auf die Sicherheit von Mensch und Maschine und im Hinblick auf eine mögliche Beschädigung der Teile von größter Bedeutung.

Vorzugsweise wirkt die vorgespannte Feder auf ein Druckstück ein, welches auf der dem Spannglied gegenüberliegenden Seite in die Aufnahmebohrung ragt. Die vorgespannte Feder ist dabei zweckmäßigerweise als Tellerfeder ausgebildet. Über das Druckstück und die vorgespannte Feder kann dann auf einfache Weise die erforderliche Haltekraft aufgebracht werden.

Vorzugsweise ist in die in die Aufnahmebohrung ragende Stirnseite von Spannglied und/oder Druckstück eine in Längsrichtung der Aufnahmebohrung ausgerichtete prismaförmige Vertiefung eingebracht. Eine derartige prismaförmige Vertiefung ergibt beim Ergreifen des zylindrischen Endes der Teile eine zweifache linienförmige Anlage und damit einen verbesserten Halt sowie ein definiertes Ausrichten des zylindrischen Endes beim Spannen.

Bei einer weiteren bevorzugten Ausgestaltung der Erfindung ist schließlich oberhalb der Aufnahmebohrung ein Sensor an dem Greifergehäuse befestigt. Vorzugsweise ist als Sensor dabei ein Ultra-Schall-Sensor vorgesehen. Anhand der Laufzeit des Echos des Ultra-Schall-Signals ist der Sensor dann in der Lage festzustellen, in welchem Abstand zum Sensor sich ein Gegenstand befindet. Dadurch ist er in der Lage zu unterscheiden, ob ein Hordenelement mit einem Teil bestückt ist oder nicht, oder ob sich versehentlich ein Teil anderer Länge in dem Hordenelement befindet. Von Vorteil ist dabei insbesondere, daß der Greifer dazu nicht erst abgesenkt werden muß, wie dies bei anderen Sensoren wie induktiven Näherungsschaltern der Fall ist.

Ein Ausführungsbeispiel der Erfindung ist in der Zeichnung dargestellt und wird im folgenden näher beschrieben. Es zeigen:

Figur 1 einen Längsschnitt durch einen Greifer eines Industrieroboters in stark vereinfachter schematischer Darstellung,

Figur 2 die Ausgestaltung von Gleitstück und Spanneinrichtung des in Figur 1 dargestellten Greifers,

Figur 3 die Ausgestaltung des Spanngliedes der in Figur 2 dargestellten Spanneinrichtung,

Figur 4 das Funktionsprinzip des Kniehebelantriebs der in Figur 2 dargestellten Spanneinrichtung und

Figur 5 die Anbringung eines Sensors an dem Greifer nach Figur 1.

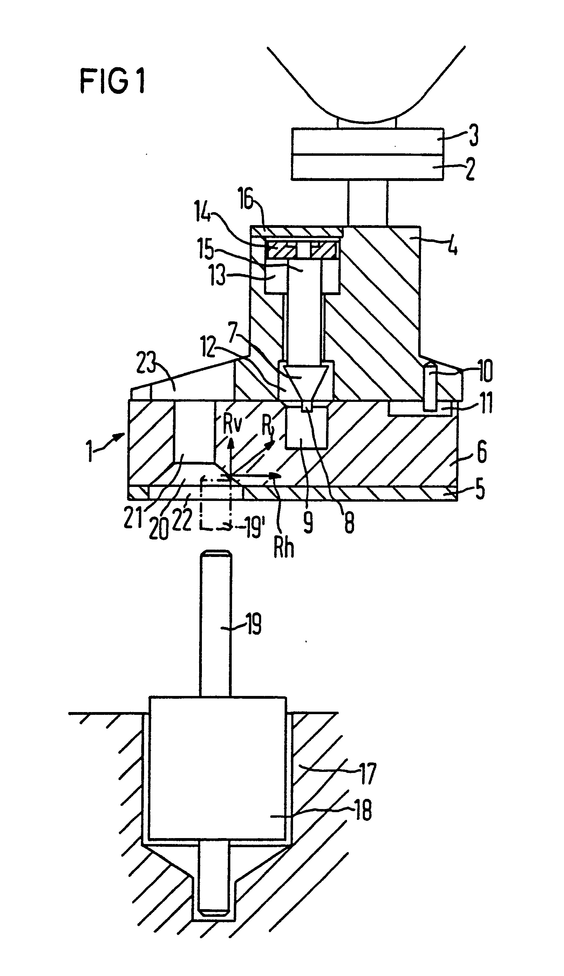

Figur 1 zeigt einen Längsschnitt durch einen Greifer, dessen insgesamt mit 1 bezeichnetes Greifergehäuse über einen Flansch 2 mit dem Flansch 3 eines Industrieroboters verbunden ist. Das Greifergehäuse 1 besteht aus einem Oberteil 4 und einem damit verbundenen Unterteil 5, wobei zwischen Oberteil 4 und Unterteil 5 ein Gleitstück 6 angeordnet ist. Durch diese Anordnung wird ein ebenes Flächengelenk gebildet, d.h. das Gleitstück 6 kann relativ zum Greifergehäuse 7 mit dem Freiheitsgrad f = 3 zwei Schiebungen und eine Drehung ausführen. Die horizontale Bewegungsfreiheit des Gleitstückes 6 ist dabei durch einen an einem Zentrierkonus 7 angebrachten zylindrischen Ansatz 8, der in eine Zentrierbohrung 9 des Gleitstückes 6 ragt, sowie durch einen im Oberteil 4 befestigten Stift 10, der in ein Langloch 11 des Gleitstückes 6 ragt, begrenzt. Durch Absenken des Zentrierkonus 7 in die zugeordnete Zentrierbohrung 9 kann eine eindeutige und reproduzierbare Position des Gleitstückes 6 zum Greifergehäuse 7 hergestellt werden. Der Zentrierkonus 7 befindet sich dabei in seiner Ruheposition in einer Bohrung 12 des Oberteils 4. Das Absenken des Zentrierkonus 7 wird pneumatisch vorgenommen durch einen in einer Zylinderbohrung 13 des Oberteils 4 geführten Kolben 14, dessen Kolbenstange 15 unmittelbar mit der Oberseite des sich nach unten verjüngenden Zentrierkonus 7 verbunden ist. Die obere Öffnung der Zylinderbohrung 13 ist dabei durch einen Deckel 16 verschlossen.

Der dargestellte Greifer soll beispielsweise in Horden bereitgestellte Rotoren ergreifen, wobei in der Zeichnung ein in einem Hordenelement 17 im wesentlichen senkrecht stehender Rotor 18 dargestellt ist. Aufgrund von Fertigungstoleranzen der Horden, von Spiel zwischen Rotor 18 und Aufnahmebohrung eines Hordenelements 17 und damit verbundenem Kippen des Rotors 18 in der Aufnahmebohrung sowie aufgrund der Positioniergenauigkeit des Greifers des Industrieroboters ist für ein sichers Greifen des zylindrischen Endes 19 des Rotors 18 eine Positionskorrektur des Greifers notwendig. Diese Positionskorrektur wird wie folgt erreicht:

Durch senkrechtes Absenken des Greifergehäuses 1 bewegt sich eine in das Gleitstück 6 eingearbeitete Zentrierglocke 20 auf das zylindrische Ende 19 des im Hordenelement 17 stehenden Rotors 18 zu. Bei dem durch das strichpunktiert dargestellte zylindrische Ende 19' aufgezeigten Berühren der Zentrierglocke 20 ergibt sich eine auf die Zentrierglocke 20 wirkende Reaktionskraft R mit einer horizontalen Komponente Rh und einer vertikalen Komponente Rv. Durch die horizontale Komponente Rh der Reaktionskraft R wird dann das Gleitstück 6 so weit verschoben, daß das zylindrische Ende 19 in eine nach oben sich an die Zentrierglocke 20 anschließende Aufnahmebohrung 21 eintreten kann. Den Eintritt und ggf. den Durchtritt des zylindrischen Endes 19 in bzw. durch das Greifergehäuse 1 wird dabei durch eine entsprechende Bohrung 22 im Unterteil 5 und eine Bohrung 23 im Oberteil 4 ermöglicht. Nach dem Eintreten des zylindrischen Endes 19 in die Aufnahmebohrung 21 wird durch Betätigung einer noch zu erläuternden Spanneinrichtung das zylindrische Ende 19 in der Aufnahmebohrung 21 festgeklemmt. Bedingt durch das Ausrichtmoment dieser Spanneinrichtung auf das nunmehr senkrecht zum Gleitstück 6 ausgerichtete zylindrische Ende 19 und die Reaktionskräfte des Hordenelements 17 auf den Rotor 18 verschiebt sich dann das Gleitstück 6 noch einmal im Greifergehäuse 1.

Der in das Gleitstück 6 eingespannte Rotor 18 steht dann senkrecht und frei von Seitenkräften im Hordenelement 17. Durch senkrechtes Verfahren des Greifergehäuses 1 nach oben kommt der Rotor 18 aus dem Hordenelement 17 frei. Ist dies geschehen, so wird durch eine pneumatische Betätigung des Kolbens 14 der Zentrierkonus 7 in die Zentrierbohrung 9 abgesenkt und dadurch eine eindeutige und reproduzierbare Position von Gleitstück 6 und Rotor 18 zum Greifergehäuse 1 hergestellt.

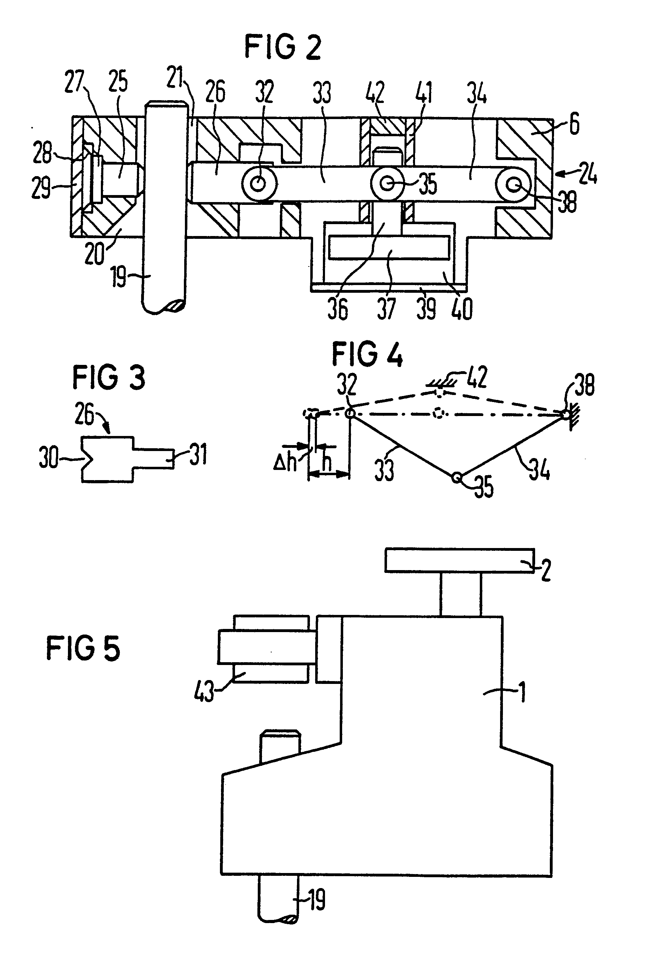

Die Funktionsweise der in das Gleitstück 6 eingebauten und insgesamt mit 24 bezeichneten Spanneinrichtung geht aus den Figuren 2 bis 4 hervor. Wie bereits erwähnt wurde, ragt das zylindrische Ende 19 durch die Aufnahmebohrung 21 des Gleitstückes 6. Senkrecht zur Aufnahmebohrung 21 befinden sich, einander gegenüberliegend, ein federnd vorgespanntes Druckstück 25, das einige 1/10 mm in die Aufnahmebohrung 21 ragt, sowie das Spannglied 26 eines Kniehebelantriebs. Das in einer nicht näher bezeichneten stufenförmigen Bohrung des Gleitstückes 6 geführte Druckstück 25 besitzt einen Kopf 27, der das Eindringen in die Aufnahmebohrung 21 begrenzt. An diesem Kopf 27 liegt eine Tellerfeder 28 an, die durch einen mit dem Gleitstück 6 fest verschraubten Deckel 29 vorgespannt wird. Das Spannglied 26 ist - wie aus Figur 3 zu ersehen ist - zum definierten Ausrichten des zylindrischen Endes 19 beim Spannen an seiner Stirnseite mit einer prismaförmigen Vertiefung 30 versehen. Der gegenüberliegende Endbereich 31 des zylindrischen Spanngliedes 26 ist beidseitig angefräst. Mit diesem Endbereich 31 ist das Spannglied 26 dann über einen Bolzen 32 an das gabelförmig ausgebildete Ende eines ersten Kniehebels 33 des Kniehebelantriebs angelenkt. Das andere Ende des ersten Kniehebels 33 bildet zusammen mit dem entsprechenden Ende eines zweiten Kniehebels 34 das Kniegelenk des Kniehebelantriebs, das über einen Bolzen 35 auch noch an die Kolbenstange 36 eines Kolbens 37 angelenkt ist. Das andere Ende des zweiten Kniehebels 34 ist durch einen Bolzen 38 unverschiebbar an das Gleitstück 6 angelenkt. Die Betätigung des gesamten Kniehebelantriebs erfolgt pneumatisch durch den Kolben 37, der in einer nach unten durch einen Deckel 39 verschlossenen Zylinderbohrung 4 geführt ist. Dabei ist der Aufwärtshub der in einer zylindrischen Führung 41 geführten Kolbenstange 36 des Kolbens 37 durch einen oberen Anschlag 42 begrenzt. Da der gesamte Kniehebelantrieb in Figur 2 in der Mittelstellung des Kniegelenks bzw. Bolzens 35 dargestellt ist, ist zu erkennen, daß die Bewegung des Kniegelenks nach oben erst in einer über die Mittelstellung hinausgehenden Lage durch den Anschlag 42 begrenzt ist. Der über die Mittelstellung hinausgehende Weg des Kniegelenks, der in Figur 2 stark übertrieben dargestellt ist, beträgt in Wirklichkeit nur 0,5 mm.

Zur genauen Schilderung der Funktion des Kniehebelantriebs wird zusätzlich noch auf die Figur 4 verwiesen, in welcher die beiden Kniehebel 33 und 34, die durch die Bolzen 32, 35 und 38 gebildeten Gelenke und der Anschlag 42 rein schematisch dargestellt sind. Dabei ist die untere Ausgangsstellung des Kniehebelantriebs durch ausgezogene Linien angedeutet. Aus dieser unteren Ausgangsstellung wird bei einer Betätigung des Kolbens 37 zunächst die strichpunktiert dargestellte Mittelstellung mit einem maximalen Hub h des Spanngliedes 26 eingenommen, wobei gleichzeitig das federnd vorgespannte Druckstück 25 so weit zurückgedrückt wird, daß das zylindrische Ende 19 die Wandung der Aufnahmebohrung 21 nicht berührt. Beim weiteren Aufwärtshub des Kolbens 37 gelangt der Kniehebelantrieb dann in die durch den Anschlag 42 begrenzte und in Figur 4 gestrichelt dargestellte obere Endstellung, in welcher der Hub des Spanngliedes 26 um den Betrag $\Delta$ h wieder zurückgeht. Diese Differenz $\Delta$ h zwischen der Spannstellung bzw. oberen Endstellung und dem maximalen Hub h in der Mittelstellung wird dabei durch einen entsprechenden Weg der vorgespannten Tellerfeder 28 ausgeglichen. Die Kraft der vorgespannten Tellerfeder 28 ist dann aber immer noch so groß, daß bei einem Ausfall der Preßluftbeaufschlagung des Kolbens 37 die Kolbenstange 36 weiterhin gegen den oberen Anschlag 42 gedrückt wird. Damit bleibt das zylindrische Ende 19 auch nach einem Ausfall der Preßluft im Gleitstück 6 gespannt.

Aus Figur 4 ist auch noch zu ersehen, daß der Bolzen 35 des Kniegelenks beim Hub des Kolbens 37 seitlich ausgelenkt wird. Diese übertrieben dargestellte und in Wirklichkeit äußerst geringe seitliche Auslenkung wird dadurch ermöglicht, daß der Bolzen 35 in einem in der Zeichnung nicht erkennbaren, horizontal ausgerichteten Langloch der Kolbenstange 36 angeordnet ist.

Figur 5 zeigt das Greifergehäuse 1 mit einem oberhalb des eingespannten zylindrischen Endes 19 angebrachten Sensor 43, der als Ultra-Schall-Sensor ausgebildet ist. Anhand der Laufzeit des Echos des Ultra-Schall-Signals ist der Sensor 43 in der Lage zu unterscheiden, ob ein Hordenelement 17 mit einem Rotor 18 (vgl. Figur 1) bestückt ist oder nicht oder ob sich ein Rotor anderer Länge in dem Hordenelement 17 befindet. Da der Arbeitsabstand eines Ultra-Schall-Sensors etwa 20 bis 30 cm beträgt, braucht das Greifergehäuse 1 für diese Feststellung nicht erst abgesenkt zu werden.

12 Patentansprüche

5 Figuren

**Patentansprüche**

1. Greifer einer Handhabungseinrichtung, insbesondere eines Industrieroboters, mit einem Greifergehäuse und einer Spanneinrichtung zum reibschlüssigen Greifen von Teilen, gekennzeichnet durch folgende Merkmale:

a) in dem Greifergehäuse (1) ist ein als ebenes Flächengelenk ausgebildetes Gleitstück (6) angeordnet,

b) in dem Gleitstück (6) befindet sich eine nach unten geöffnete und nach oben in eine Aufnahmebohrung (21) übergehende, konische Zentrierglocke (20),

c) die in dem Gleitstück (6) angeordnete Spanneinrichtung (24) besitzt mindestens ein queraxial in die Aufnahmebohrung drückbares Spannglied (26).

2. Greifer nach Anspruch 1, dadurch gekennzeichnet, daß das Gleitstück (6) mit Hilfe einer Zentriereinrichtung in eine reproduzierbare Position zum Greifergehäuse (1) bringbar ist.

3. Greifer nach Anspruch 2, dadurch gekennzeichnet, daß die Zentriereinrichtung aus einem in dem Greifergehäuse (1) angeordneten und in eine Zentrierbohrung (9) des Gleitstückes (6) absenkbaren Zentrierkonus (7) besteht.

4. Greifer nach Anspruch 3, dadurch gekennzeichnet, daß die Bewegungsfreiheit des Gleitstückes (6) durch einen in die Zentrierbohrung (9) ragenden Ansatz (8) des Zentrierkonus (7) und durch einen in ein Langloch (11) ragenden Stift (10) begrenzt ist.

5. Greifer nach Anspruch 4, dadurch gekennzeichnet, daß der in dem Greifergehäuse (1) befestigte Stift (10) in ein Langloch (11) des Gleitstückes (6) ragt.

6. Greifer nach einem der vorhergehenden Ansprüche, dadurch gekennzeichnet , daß das Spannglied (26) der Spanneinrichtung (24) an einen Kniehebelantrieb angelenkt ist.

7. Greifer nach Anspruch 6, dadurch gekennzeichnet, daß die Bewegung des Kniegelenks (35) des Kniehebelantriebs in einer über die Mittelstellung hinausgehenden Lage durch einen Anschlag (42) begrenzt ist, wobei die Differenz ($\Delta$ h) zwischen Spannstellung und maximalem Hub (h) des Spanngliedes (26) durch eine vorgespannte Feder (28) ausgleichbar ist.

8. Greifer nach Anspruch 7, dadurch gekennzeichnet, daß die vorgespannte Feder (28) auf ein Druckstück (25) einwirkt, welches auf der dem Spannglied (26) gegenüberliegenden Seite in die Aufnahmebohrung (21) ragt.

9. Greifer nach Anspruch 8, dadurch gekennzeichnet, daß in die in die Aufnahmebohrung (21) ragende Stirnseite von Spannglied (26) und/oder Druckstück (25) eine in Längsrichtung der Aufnahmebohrung (21) ausgerichtete prismaförmige Vertiefung (30) eingebracht ist.

10. Greifer nach einem der vorhergehenden Ansprüche, dadurch gekennzeichnet , daß oberhalb der Aufnahmebohrung (21) ein Sensor (43) an dem Greifergehäuse (1) befestigt ist.

11. Greifer nach Anspruch 10, dadurch gekennzeichnet, daß als Sensor (43) ein Ultra-Schall-Sensor vorgesehen ist.

**Claims**

1. A gripper for a manipulator, in particular for an industrial robot, comprising a gripper housing and a clamping device for the friction gripping of components, characterised by the following features:

(a) a sliding piece (6) designed as a flat surface joint is arranged in the gripper housing (1),

(b) the sliding piece (6) comprises a downwardly open conical centering bell (20) which upwardly converges into a receiving bore (21),

(c) the clamping device (24) arranged in the sliding piece (6) has at least one clamping element (26) which can be forced into the receiving bore in a direction transverse to its axis.

2. A gripper as claimed in claim 1, characterised in that the sliding piece (6) can be brought into a reproducible position in relation to the gripper housing (1) with the aid of a centering device.

3. A gripper as claimed in claim 2, characterised in that the centering device consists of a centering cone (7) which is arranged in the gripper housing (1) and can be lowered into a centering bore (9) of the sliding piece (6).

4. A gripper as claimed in claim 3, characterised in that the freedom of motion of the sliding piece (6) is restricted by an extension (8) of the centering cone (7) which protrudes into the centering bore (9) and by a pin (10) which protrudes into an oblong hole (11).

5. A gripper as claimed in claim 4, characterised in that the pin (10) fixed in the gripper housing (1) protrudes into a slot (11) of the sliding piece (6).

6. A gripper as claimed in one of the preceding claims, characterised in that the clamping element (26) of the clamping device (24) is articulated to a toggle lever drive.

7. A gripper as claimed in claim 6, characterised in that the movement of the toggle joint (35) of the toggle lever drive is restricted by a stop (42) in a position which exceeds the central position, where the difference ($\Delta$ h) between the clamping position and the maximal lift (h) of the clamping element (26) can be balanced by a pre-stressed spring (28).

8. A gripper as claimed in claim 7, characterised in that the pre-stressed spring (28) acts upon a pressure piece (25) which protrudes into the receiving bore (21) on the side opposite the clamping element (26).

9. A gripper as claimed in claim 8, characterised in that a prism-shaped recess (30) aligned in the longitudinal direction of the receiving bore (21) is formed in that end face of the clamping element (26) and/or the pressure piece (25) which protrudes into the receiving bore (21).

10. A gripper as claimed in one of the preceding claims characterised in that a sensor (43) is secured to the gripper housing (1) above the receiving bore (21).

11. A gripper as claimed in claim 10, <u>characterised in that</u> an ultrasonic sensor is provided as the sensor (43).

## Revendications

1. Dispositif de préhension pour un manipulateur, notamment un robot industriel, comportant un boîtier et un dispositif de serrage permettant de saisir des pièces conformément à une liaison par frottement, caractérisé par les caractéristiques suivantes:

a) un élément coulissant (6) réalisé sous la forme d'une articulation se déplaçant dans une surface plane et disposée dans le boîtier (1) du dispositif de préhension,

b) dans l'élément coulissant (6) se trouve disposée une cloche conique de centrage (20) s'ouvrant vers le bas et se poursuivant vers le haut par un perçage de réception (21),

c) le dispositif de serrage (24), disposé dans l'élément coulissant (6), possède au moins un organe de serrage (26) pouvant être repoussé dans le perçage de réception, transversalement par rapport à l'axe.

2. Dispositif de préhension suivant la revendication 1, caractérisé par le fait que l'élément coulissant (6) peut être amené, à l'aide d'un dispositif de centrage, dans une position reproductible par rapport au boîtier (1) du dispositif de préhension.

3. Dispositif de préhension suivant la revendication 2, caractérisé par le fait que le dispositif de centrage est constitué par un cône de centrage (7) disposé dans le boîtier (1) du dispositif de préhension et pouvant être abaissé dans un perçage de centrage (9) de l'élément coulissant (6).

4. Dispositif de préhension suivant la revendication 3, caractérisé par le fait que la liberté de déplacement de l'élément coulissant (6) est limitée par un appendice saillant (8), pénétrant dans le perçage de centrage (9), du cône de centrage (7) et par une broche (10) pénétrant dans un trou allongé (11).

5. Dispositif de préhension suivant la revendication 4, caractérisé par le fait que la broche (10) fixée dans le boîtier (1) du dispositif de préhension pénétre dans un trou allongé (11) de l'élément coulissant (6).

6. Dispositif de préhension suivant l'une des revendications précédentes, caractérisé par le fait que l'organe de serrage (26) du dispositif de serrage (24) est articulé sur un dispositif d'entraînement à leviers à genouillère.

7. Dispositif de préhension suivant la revendication 6, caractérisé par le fait que le déplacement de l'articulation à genouillère (35) du dispositif d'entraînement à leviers à genouillère est limité par une butée (42) dans une position écartée de la position médiane, auquel cas la différence ($\Delta$h) entre la position de serrage et la course maximale (h) de l'organe de serrage (26) peut être compensée par un ressort précontraint (28).

8. Dispositif de préhension suivant la revendication 7, caractérisé par le fait que le ressort précontraint (28) agit sur un organe de pression (25) qui pénètre dans le perçage de réception (21) sur le côté situé à l'opposé de l'organe de serrage (26).

9. Dispositif de préhension suivant la revendication 8, caractérisé par le fait qu'un renfoncement prismatique (30), qui s'étend suivant la direction longitudinale du perçage de réception (21) est ménagé dans la face frontale, pénétrant dans le perçage de réception (21), de l'organe de serrage (26) et/ou de l'organe de pression (25).

10. Dispositif de préhension suivant l'une des revendications précédentes, caractérisé par le fait qu'un capteur (43) est fixé, au-dessus du perçage de réception (21), sur le boîtier (1) du dispositif de préhension.

11. Dispositif de préhension suivant la revendication 10, caractérisé par le fait qu'il est prévu, comme capteur (43), un capteur ultrasonique.

FIG 1

**FIG 2**

**FIG 3**

**FIG 4**

**FIG 5**